(19) Europäisches Patentamt
European Patent Office
Office européen des brevets

(11) EP 1 078 939 A2

(12) **EUROPÄISCHE PATENTANMELDUNG**

(43) Veröffentlichungstag:
**28.02.2001 Patentblatt 2001/09**

(51) Int. Cl.$^7$: **C08F 236/10**, C08F 4/54

(21) Anmeldenummer: **00116283.3**

(22) Anmeldetag: **10.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **23.08.1999 DE 19939842**

(71) Anmelder: **BAYER AG**
**51368 Leverkusen (DE)**

(72) Erfinder:
- **Windisch, Heike, Dr.**
  **51379 Leverkusen (DE)**
- **Trimbach, Jürgen**
  **50859 Köln (DE)**
- **Schertl, Peter, Dr.**
  **51373 Leverkusen (DE)**
- **Giebeler, Ellen, Dr.**
  **50735 Köln (DE)**
- **Engehausen, Rüdiger, Dr.**
  **41539 Dormagen (DE)**

(54) **Verfahren zur Copolymerisation von konjugierten Diolefinen (Dienen) und vinylaromatischen Monomeren mit Katalysatoren der Seltenen Erden sowie die Verwendung der Copolymerisate in Kautschukmischungen für Reifenanwendungen**

(57) Die vorliegende Erfindung betrifft ein Verfahren zur Copolymerisation von konjugierten Diolefinen und vinylaromatischen Monomeren in Gegenwart von Katalysatoren der Seltenen Erden sowie die Verwendung der Copolymerisate in Kautschukmischungen für Reifenanwendungen.

EP 1 078 939 A2

**Beschreibung**

Die vorliegende Erfindung betrifft ein Verfahren zur Copolymerisation von konjugierten Diolefinen und vinylaromatischen Monomeren in Gegenwart von Katalysatoren der Seltenen Erden sowie die Verwendung der Copolymerisate in Kautschukmischungen für Reifenanwendungen.

Die Polymerisation von konjugierten Diolefinen ist seit langem bekannt und beispielsweise beschrieben von W. Hoffmann, Rubber Technology Handbook, Hanser Publishers (Carl Hanser Verlag) München, Wien, New York, S. 52 ff., 1989. So wird beispielsweise Polybutadien heute in überwiegendem Maße hergestellt durch Lösungspolymerisation mit Hilfe von Koordinationskatalysatoren des Ziegler-Natta-Typs, beispielsweise auf Basis von Titan-, Cobalt-, Nickel- und Neodym-Verbindungen, oder in Gegenwart von Alkyllithium-Verbindungen. Das jeweils verwendete Lösungsmittel hängt stark vom eingesetzten Katalysatortyp ab. Bevorzugt werden Benzol oder Toluol sowie aliphatische oder cycloaliphatische Kohlenwasserstoffe eingesetzt.

In US-5 096 970 und EP-30 40 88 wird ein Verfahren zur Herstellung von Polybutadien in Styrol unter Verwendung von Katalysatoren auf Basis von Neodymphosphonaten, von organischen Aluminiumverbindungen, wie Di(isobutyl)aluminiumhydrid (DIBAH), und auf Basis einer halogenhaltigen Lewis-Säure, wie Ethylaluminiumsesquichlorid, beschrieben, bei dem Butadien in Styrol ohne weiteren Zusatz von inerten Lösungsmitteln zu einem cis-1,4-Polybutadien umgesetzt wird. Nachteilig an diesem Katalysator ist, dass die Bildung von Styrol-Butadien-Copolymeren in diesem Fall nicht möglich ist.

Aus US-4 540 744 ist bekannt, anionische Initiatoren für die Polymerisation von Butadien und Styrol in Hexan einzusetzen. Nachteilig an dem beschriebenen Verfahren ist, dass eine Steuerung des *cis*/*trans*-Verhältnisses im Butadien-Anteil unter anwendungstechnisch relevanten Bedingungen nur in geringem Maße möglich ist, ebenso wie die Erzielung höherer *cis*-Gehalte. Zur Anwendung im Bereich Reifen- und Kunststoffmodifizierung jedoch sind hohe *cis*-Gehalte vorteilhaft.

Ein Nachteil bei der Verwendung anionischer Initiatoren besteht darin, dass mit diesen Initiatoren nur eine geringe Steuerung der Mikrostruktur möglich ist. Es ist z.B. nicht möglich, mit anionischen Initiatoren unter anwendungstechnisch relevanten Bedingungen ein hoch *cis*-haltiges SBR herzustellen, bei dem der cis-1,4-Gehalt über 50 % beträgt. Durch Zusatz von Modifikatoren kann nur der Anteil an 1,2-Einheiten erhöht werden, wobei der 1,2-Gehalt zu einer Erhöhung der Glastemperatur des Polymeren führt. Nachteilig ist diese Tatsache vor allem deshalb, weil bei diesem Verfahren SBR gebildet wird, bei dem mit steigendem Styrolgehalt im Vergleich zu homopolymerem Polybutadien (BR) eine weitere Erhöhung der Glastemperatur resultiert. Für einen Einsatz des SBR-Kautschuks zur Schlagzähmodifikation von beispielsweise HIPS oder ABS wirkt sich jedoch eine hohe Glastemperatur des Kautschuks nachteilig auf die Tieftemperaturzähigkeit des Werkstoffes aus, so dass Kautschuke mit niedrigen Glastemperaturen bevorzugt werden.

Von Kobayashi et al. wurde z.B. in J. Polym. Sci., Part A, Polym. Chem., 33 (1995) 2175 und 36 (1998) 241 ein Katalysatorsystem bestehend aus halogenierten Acetaten der Seltenen Erden, wie z.B. $Nd(OCOCCl_3)_3$ oder $Gd(OCOCF_3)_3$, mit Tri(isobutyl)aluminium und Diethylaluminiumchlorid beschrieben, das im inerten Lösungsmittel Hexan die Copolymerisation von Butadien und Styrol ermöglicht. Nachteilig an diesen Katalysatoren ist, dass die Katalysatoraktivität bereits bei einem geringen Styroleinbau von etwa 5 Mol-% auf unter 10 g Polymer/mmol Katalysator/h sinkt und dass der 1,4-*cis*-Gehalt des Polymeren mit steigendem Styrolgehalt deutlich abnimmt. Nachteilig an diesem Verfahren ist weiterhin, dass eine Variation der Mikrostruktur der Polybutadiensegmente im erhaltenen SBR durch Zusatz geeigneter Modifikatoren nicht möglich ist.

Aus der Patentanmeldung PCT/EP 99/04741 ist ein Verfahren zur Polymerisation von konjugierten Diolefinen mit vinylaromatischen Verbindungen bekannt, bei dem die Polymerisation in Gegenwart von Katalysatoren auf Basis von Verbindungen der Seltenen Erden, Organo-Aluminium-Verbindungen und gegebenenfalls Cyclopentadienen durchgeführt wird, wobei die eingesetzten aromatischen Vinylverbindungen als Lösungsmittel dienen.

Die nach diesem Verfahren hergestellten Copolymerisate werden insbesondere zur Herstellung von ABS-Kunststoffen verwendet. Der ABS-Kunststoff kann dabei so hergestellt werden, dass man in einem ersten Schritt die Copolymerisation durchführt und bei Verwendung von Styrol als Lösungsmittel in einem zweiten Polymerisationsschritt das im Reaktionsgemisch verbliebene Styrol polymerisiert. Dieser zweite Reaktionsschritt kann in Gegenwart von gängigen aliphatischen oder aromatischen Lösungsmitteln durchgeführt werden.

Die nach dem in der erwähnten Patentanmeldung beschriebenen Verfahren durchgeführte Polymerisation von konjugierten Dienen und vinylaromatischen Momomeren ohne inerte Lösungsmittel besitzt den Nachteil, dass sich z.B. die technische Aufarbeitung des dabei erhaltenen Copolymerisats schwierig gestaltet, da die vinylaromatischen Monomere, die als Lösungsmittel eingesetzt wurden, nur zu einem sehr geringen Teil copolymerisiert wurden, was bei der Abtrennung, z.B. durch Strippen, zu einer unerwünschten Nachpolymerisation der reaktiven Monomere führen kann.

Aufgabe der vorliegenden Erfindung war es nun, ein Verfahren zur Copolymerisation von konjugierten Diolefinen und vinylaromatischen Monomeren zur Verfügung zu stellen, mit dem Copolymere erhalten werden, bei denen

die Polymerzusammensetzung bezüglich des Gehalts an Vinylaromaten und Diolefinen und bezüglich der Selektivität der polymerisierten Diolefine, d.h. z.B. Gehalt an *cis*-ständigen Doppelbindungen und an 1,2-Einheiten mit seitenständigen Vinylgruppen, variiert werden kann, wobei die Glastemperatur des Polymeren unter -20°C, bevorzugt unter -55°C liegt, gemessen mittels DSC. Außerdem sollten die erhaltenen Copolymerisate sich leicht aus dem Reaktionsgemisch aufarbeiten lassen.

Bei den erfindungsgemäßen Katalysatorsystemen besteht die Möglichkeit, den *cis*-Gehalt und damit das Verhältnis von *cis*- zu *trans*-Anteil unabhängig vom Styrolgehalt einzustellen. Diese Variationsmöglichkeit ist mit den bekannten und in der Technik verwendeten Katalysatorsystemen auf Basis Lithiumalkyl unter anwendungstechnisch relevanten Bedingungen nicht möglich, hier sind die *cis*/*trans*-Verhältnisse festgelegt.

Es ist bekannt, dass die Compounds für die Reifenmischungen, insbesondere für die Lauffläche, aus mehreren Kautschuken bestehen, um ein Optimum der Eigenschaften wie z. B. Rollwiderstand, Abrieb und Naßrutschfestigkeit zu erzielen. Bei diesen Kautschuken handelt es sich in der Regel um Naturkautschuk und synthetische Kautschuke wie Polybutadien, Butadien-Styrol-Kautschuk oder Polyisopren. Ein Problem bei der Verwendung von Kautschukmischungen besteht darin, dass es zu Unverträglichkeiten zwischen den einzelnen Kautschuktypen kommen kann. Solche Unverträglichkeiten können sich in erhöhtem Reifenabrieb, niedrigerer Weiterreißfestigkeit und geringerer Lebensdauer des Reifens bemerkbar machen.

Es ist auch bekannt, dass sich über den Styrolgehalt des Butadien-Styrol-Kautschuks das Verhältnis von Rollwiderstand und Nassrutschfestigkeit beeinflussen lässt, beispielsweise weist ein Kautschuk mit hohem Styrolanteil Vorteile bezüglich der Nassrutschfestigkeit auf.

Mit dem erfindungsgemäßen Katalysatorsystem ist es nun möglich, einerseits gezielt Styrolgehalte einzustellen, um auf diese Weise ein Optimum an Sicherheit und Nassrutschfestigkeit zu erreichen, und andererseits über die Einstellung eines geeigneten *cis*/*trans*-Verhältnisses für eine Verträglichkeit innerhalb der Kautschukmischung zu sorgen, die in geringem Abrieb und langer Lebensdauer zum Ausdruck kommt.

Aufgabe der vorliegenden Erfindung ist darüber hinaus, Copolymerisate aus konjugierten Diolefinen und aromatischen Vinylverbindungen zur Verfügung zu stellen, die sich aufgrund ihres hohen Gehaltes an *cis*-ständigen Doppelbindungen sowie Variationsmöglichkeiten in bezug auf den Gehalt von seitenständigen Vinylgruppen hervorragend für den Einsatz im Reifenbau eignen.

Gegenstand der vorliegenden Erfindung ist daher ein Verfahren zur Copolymerisation von konjugierten Diolefinen mit vinylaromatischen Verbindungen, das dadurch gekennzeichnet ist, dass man die Polymerisation der konjugierten Diolefine mit den vinylaromatischen Verbindungen in Gegenwart von Katalysatoren bestehend aus

a) mindestens einer Verbindung der Seltenen Erdmetalle,

b) mindestens einer Cyclopentadienylverbindung und

c) mindestens einer Organoaluminiumverbindung

oder bestehend aus

a) mindestens einer Verbindung der Seltenen Erdmetalle und

c) mindestens einer Organoaluminiumverbindung

bei Temperaturen von -30 bis +100°C in inerten, aromatischen, aliphatischen oder cycloaliphatischen Lösungsmitteln oder deren Mischungen durchführt, wobei das molare Verhältnis der Komponenten (a):(b):(c) im Bereich von 1:(0,01 bis 1,99):(0,1 bis 1000) oder wobei das molare Verhältnis der Komponenten (a):(c) im Bereich von 1:0,1 bis 1000 liegt, die Komponente (a) des Katalysators in Mengen von 1 µmol bis 10 mmol, bezogen auf 100 g der eingesetzten konjugierten Diolefine, und die aromatische Vinylverbindung in Mengen von 20 g bis 2000 g, bezogen auf 100 g der eingesetzten konjugierten Diolefine, eingesetzt werden.

Als aromatische Vinylverbindungen können erfindungsgemäß eingesetzt werden: Styrol, α-Methylstyrol, α-Methylstyrol-Dimer, p-Methylstyrol, Divinylbenzol und/oder anderen Alkylstyrolen mit 2 bis 6 C-Atomen im Alkylrest, wie Ethylstyrole. Ganz besonders bevorzugt wird bei der erfindungsgemäßen Polymerisation Styrol, α-Methylstyrol, α-Methylstyrol-Dimer und/oder p-Methylstyrol eingesetzt.

Als konjugierte Diolefine (Diene) können in das erfindungsgemäße Verfahren z.B. 1,3-Butadien, 1,3-Isopren, 2,3-Dimethylbutadien, 2,4-Hexadien, 1,3-Pentadien und/oder 2-Methyl-1,3-pentadien eingesetzt werden.

Selbstverständlich ist es nach dem erfindungsgemäßen Verfahren auch möglich, neben den konjugierten Diolefinen noch andere ungesättigte Verbindungen, wie Ethylen, Propen, 1-Buten, 1-Penten, 1-Hexen und/oder 1-Octen, bevorzugt Ethylen und/oder Propen, einzusetzen, die mit den genannten Diolefinen copolymerisiert werden

können.

Die Menge an ungesättigten Verbindungen, die mit den konjugierten Diolefinen copolymerisiert werden können, richtet sich nach dem jeweiligen Verwendungszweck der gewünschten Copolymerisate und kann leicht durch entsprechende Vorversuche bestimmt werden. Sie beträgt üblicherweise 0,1 bis 80 Mol-%, bevorzugt 0,1 bis 60 Mol-%, besonders bevorzugt 0,1 bis 45 Mol-%, bezogen auf das Diolefin.

Bevorzugt liegt das molare Verhältnis der Komponenten (a):(b):(c) beim eingesetzten Katalysator im Bereich von 1:0,1 bis 1,9:3 bis 500, besonders bevorzugt 1:0,2 bis 1,8:5 bis 100. Das molare Verhältnis der Komponente (a):(c) liegt bevorzugt im Bereich von 1:3 bis 500, insbesondere 1:5 bis 100.

Als Verbindungen der Seltenen Erdmetalle (Komponente (a)) kommen insbesondere solche in Frage, die ausgewählt sind aus

- einem Alkoholat der Seltenen Erdmetalle,
- einem Phosphonat, Phosphinat und/oder Phosphat der Seltenen Erdmetalle,
- einem Carboxylat der Seltenen Erdmetalle,
- einer Komplexverbindung der Seltenen Erdmetalle mit Diketonen und/oder
- einer Additionsverbindung der Halogenide der Seltenen Erdmetalle mit einer Sauerstoff- oder Stickstoff-Donatorverbindung.

Die zuvor genannten Verbindungen der Seltenen Erdmetalle sind beispielsweise näher beschrieben in EP-01 11 84.

Die Verbindungen der Seltenen Erdmetalle basieren insbesondere auf den Elementen mit den Ordnungszahlen 21, 39 und 57 bis 71. Bevorzugt werden als Seltene Erdmetalle eingesetzt Lanthan, Praseodym oder Neodym oder ein Gemisch von Elementen der Seltenen Erdmetalle, welches mindestens eines der Elemente Lanthan, Praseodym oder Neodym zu wenigstens 10 Gew.-% enthält. Ganz besonders bevorzugt werden als Seltene Erdmetalle Lanthan oder Neodym eingesetzt, die wiederum mit anderen Seltenen Erdmetallen abgemischt sein können. Der Anteil an Lanthan und/oder Neodym in einem solchen Gemisch beträgt besonders bevorzugt mindestens 30 Gew.-%.

Als Alkoholate, Phosphonate, Phosphinate und Carboxylate der Seltenen Erdmetalle oder als Komplexverbindungen der Seltenen Erdmetalle mit Diketonen kommen insbesondere solche in Frage, in denen die in den Verbindungen enthaltene organische Gruppe insbesondere geradkettig oder verzweigte Alkylreste mit 1 bis 20 Kohlenstoffatomen, bevorzugt 1 bis 15 Kohlenstoffatomen, enthält, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl oder neo-Dodecyl.

Als Alkoholate der Seltenen Erden werden z.B. genannt: Neodym(III)-n-propanolat, Neodym(III)-n-butanolat, Neodym(III)-n-decanolat, Neodym(III)-iso-propanolat, Neodym(III)-2-ethyl-hexanolat, Praseodym(III)-n-propanolat, Praseodym(III)-n-butanolat, Praseodym(III)-n-decanolat, Praseodym(III)-iso-propanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat und Lanthan(III)-2-ethyl-hexanolat, bevorzugt Neodym(III)-n-butanolat, Neodym(III)-n-decanolat und Neodym(III)-2-ethylhexanolat.

Als Phosphonate, Phosphinate und Phosphate der Seltenen Erden werden z.B. genannt: Neodym(III)-dibutylphosphonat, Neodym(III)-dipentylphosphonat, Neodym (III)-dihexylphosphonat, Neodym(III)-diheptylphosphonat, Neodym(III)-dioctylphosphonat, Neodym(III)-dinonylphosphonat, Neodym(III)-didodecylphosphonat, Neodym(III)-dibutylphosphinat, Neodym(III)-dipentylphosphinat, Neodym(III)-dihexylphosphinat, Neodym(III)-diheptylphosphinat, Neodym(III)-dioctylphosphinat, Neodym(III)-dinonylphosphinat, Neodym(III)-didodecylphosphinat und Neodym (III)-phosphat, bevorzugt Neodym(III)-dioctylphosphonat und Neodym(III)-dioctylphosphinat.

Als Carboxylate der Seltenen Erdmetalle sind geeignet: Lanthan(III)-propionat, Lanthan(III)-diethylacetat, Lanthan(III)-2-ethylhexanoat, Lanthan(III)-stearat, Lanthan(III)-benzoat, Lanthan-(III)-cyclohexancarboxylat, Lanthan(III)-oleat, Lanthan (III)-versatat, Lanthan(III)-naphthenat, Praseodym(III)-propionat, Praseodym(III)-diethylacetat, Praseodym(III)-2-ethylhexanoat, Praseodym(III)-stearat, Praseodym (III)-benzoat, Praseodym(III)-cyclohexancarboxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat und Neodym(III)-naphthenat, bevorzugt Neodym(III)-2-ethylhexanoat, Neodym (III)-versatat und Neodym(III)-naphthenat. Besonders bevorzugt ist Neodymversatat.

Als Komplexverbindungen der Seltenen Erdmetalle mit Diketonen seien genannt: Lanthan(III)-acetylacetonat, Praseodym(III)-acetylacetonat und Neodym(III)-acetylacetonat, bevorzugt Neodym(III)-acetylacetonat.

Als Additionsverbindungen der Halogenide der Seltenen Erdmetalle mit einer Sauerstoff- oder Stickstoff-Donatorverbindung werden beispielsweise genannt: Lanthan-(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym-(III)-bromid mit Tetrahydrofuran, Neodym(III)-bromid mit iso-Propanol, Neodym(III)-bromid mit Pyridin, Neodym(III)-bromid mit 2-Ethylhexanol und Neodym(III)-bromid mit Ethanol, bevorzugt Lanthan(III)-chlorid mit Tributylphosphat, Lanthan-(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol und Neodym(III)-chlorid mit Ethanol.

Ganz besonders bevorzugt werden als Verbindungen der Seltenen Erdmetalle eingesetzt Neodymversatat, Neodymoctanoat und/oder Neodymnaphthenat.

Die obengenannten Verbindungen der Seltenen Erdmetalle können sowohl einzeln als auch im Gemisch untereinander eingesetzt werden. Das günstigste Mischungsverhältnis kann leicht durch entsprechende Vorversuche bestimmt werden.

Als Cyclopentadiene (Komponente (b)) werden Verbindungen der Formeln (I), (II) oder (III)

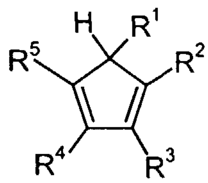

(I)

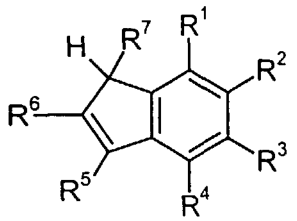

(II)

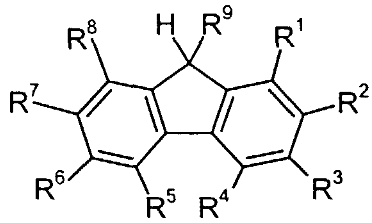

(III)

eingesetzt, in denen $R^1$ bis $R^9$ gleich oder verschieden sind oder gegebenenfalls miteinander verbunden sind oder am Cyclopentadien der Formel (I), (II) oder (III) kondensiert sind, und für Wasserstoff, eine $C_1$- bis $C_{30}$-Alkylgruppe, eine $C_6$- bis $C_{10}$-Arylgruppe, eine $C_7$- bis $C_{40}$-Alkylarylgruppe oder eine $C_3$- bis $C_{30}$- Silylgruppe stehen, wobei die Alkylgruppen entweder gesättigt oder einfach oder mehrfach ungesättigt sein können und Heteroatome, wie Sauerstoff, Stickstoff oder Halogenide, enthalten können. Insbesondere können die Reste für Wasserstoff, Methyl, Ethyl, n-Propyl, Isopropyl, n-Butyl, Isobutyl, tert.-Butyl, Phenyl, Methylphenyl, Cyclohexyl, Benzyl, Trimethylsilyl oder Trifluormethyl stehen.

Beispiele für die Cyclopentadiene sind das unsubstituierte Cyclopentadien, Methylcyclopentadien, Ethylcyclopentadien, n-Butylcyclopentadien, tert.-Butylcyclopentadien, Vinylcyclopentadien, Benzylcyclopentadien, Phenylcyclopentadien, Trimethylsilylcyclopentadien, 2-Methoxyethylcyclopentadien, 1,2-Dimethylcyclopentadien, 1,3 - Dimethylcyclopentadien, Trimethylcyclopentadien, Tetramethylcyclopentadien, Tetraphenylcyclopentadien, Tetrabenzylcyclopentadien, Pentamethylcyclopentadien, Pentabenzylcyclopentadien, Ethyl-tetramethylcyclopentadien, Trifluormethyl-tetramethylcyclopentadien, Inden, 2-Methylindenyl, Trimethylinden, Hexamethylinden, Heptamethylinden, 2-Methyl-4-phenylindenyl, Fluoren oder Methylfluoren.

Die Cyclopentadiene können ebenfalls einzeln oder im Gemisch untereinander eingesetzt werden.

Als Organoaluminium-Verbindungen (Komponente (c)) kommen insbesondere Alumoxane und/oder Aluminiumorganylverbindungen in Frage.

Als Alumoxane sind solche Aluminum-Sauerstoff-Verbindungenzu nennen, die, wie dem Fachmann bekannt ist, durch Kontakt von Organoaluminium-Verbindungen mit kondensierenden Komponenten, wie Wasser, erhalten werden und die nichtcyclische oder cyclische Verbindungen der Formel $(-Al(R)O-)_n$ darstellen, wobei R gleich oder verschieden sein kann und für eine lineare oder verzweigte Alkylgruppe mit 1 bis 10 Kohlenstoffatomen steht, die noch Heteroatome, wie z.B. Sauerstoff oder Stickstoff, enthalten kann. Insbesondere steht R für Methyl, Ethyl, n-Propyl, iso-Propyl, n-Butyl, iso-Butyl, tert-Butyl, n-Octyl oder iso-Octyl, besonders bevorzugt für Methyl, Ethyl oder iso-Butyl. Als Beispiele für Alumoxane werden genannt: Methylalumoxan, Ethylalumoxan und iso-Butylalumoxan, bevorzugt Methylalumoxan und iso-Butylalumoxan.

Als Aluminiumorganylverbindungen sind insbesondere Verbindungen der Formel $AlR_{3-d}X_d$ zu nennen, wobei

R gleich oder verschieden sein kann und für eine $C_1$-$C_{10}$-Arylgruppe oder eine $C_7$- bis $C_{40}$-Alkylarylgruppe stehen kann, wobei die Alkylgruppen entweder gesättigt oder einfach ungesättigt sein können und Heteroatome, wie Sauerstoff oder Stickstoff, enthalten können,

X für ein Wasserstoff, ein Alkoholat, Phenolat oder Amid steht und

d eine Zahl von 0 bis 2 bedeutet.

Als Organoaluminium-Verbindungen der Formel $AlR_{3-d}X_d$ können insbesondere eingesetzt werden: Trimethylaluminium, Triethylaluminium, Tri-n-propylaluminium, Tri-iso-propylaluminium, Tri-n-butylaluminium, Tri-iso-butylaluminium, Tripentylaluminium, Trihexylaluminium, Tricyclohexylaluminium, Trioctylaluminium, Diethylaluminiumhydrid, Di-n-butylaluminiumhydrid, Di-iso-butylaluminiumhydrid, Diethylaluminiumbutanolat, Diethylaluminiummethyliden(dimethyl)amin und Diethyllauminiumimethyliden(methyl)ether, bevorzugt Trimethylaluminium, Triethylaluminium, Tri-iso-butylaluminium und Di-iso-butylaluminiumhydrid.

Die Organoaluminium-Verbindungen können wiederum einzeln oder im Gemisch untereinander eingesetzt werden.

Es ist auch möglich, den Katalysatorkomponenten (a) bis (c) noch eine weitere Komponente (d) zuzusetzen. Diese Komponente (d) kann ein konjugiertes Dien sein, das z.B. das gleiche Dien ist, das später mit dem Katalysator polymerisiert werden soll, bevorzugt werden Butadien und/oder Isopren verwendet, oder das z.B. das gleiche vinylaromatische Monomer, das später mit dem Katalysator polymerisiert werden soll, bevorzugt werden Stryol oder substituierte Styrolderivate, oder Mischungen von Dien und vinylaromatischem Monomer.

Wird die Komponente (d) dem Katalysator zugesetzt, so beträgt die Menge an (d) bevorzugt 1 bis 1000 mol, bezogen auf 1 mol der Komponente (a), besonders bevorzugt 1 bis 100 mol. Ganz besonders bevorzugt werden 1 bis 50 mol, bezogen auf 1 mol der Komponente (a), an (d) eingesetzt.

Bei dem erfindungsgemäßen Verfahren werden die Katalysatoren in Mengen von bevorzugt 10 μmol bis 5 mmol der Komponente (a), besonders bevorzugt 20 μm bis 1 mmol der Komponente (a), bezogen auf 100 g der Monomeren, eingesetzt. Selbstverständlich ist es auch möglich, die Katalysatoren im beliebigen Gemisch untereinander einzusetzen.

Die Menge an eingesetzten aromatischen Vinylverbindungen beträgt bevorzugt 30 bis 1000 g, ganz besonders bevorzugt 50 bis 500 g, bezogen auf 100 g der eingesetzten Diolefine.

Als Lösungsmitttel werden in das erfindungsgemäße Verfahren inerte, aromatische, aliphatische oder cycloaliphatische Lösungsmittel, die gegebenenfalls z.B. durch Halogene oder $C_1$-$C_4$-Alkylreste substituiert sein können, eingesetzt. Beispielsweise kommen als Lösungsmittel infrage: Benzol, Toluol, Pentane, Hexane, Heptane, Cyclohexan, Ethylbenzol, Dimethylbenzol, Dichlormethan sowie Chlorbenzol. Bei den aliphatischen Lösungsmittel kommen sowohl die geradkettigen Alkane als auch deren verzweigte Isomere in Betracht

Die Lösungsmittel können sowohl einzeln oder im Gemisch untereinander eingesetzt werden; das günstigste Mischungsverhältnis ist durch entsprechende Vorversuche leicht zu ermitteln.

Die Menge an Lösungsmittel beträgt bei dem erfindungsgemäßen Verfahren üblicherweise 1 000 bis 100 g, bevorzugt 500 bis 150 g, bezogen auf 100 g Monomer.

Das erfindungsgemäße Verfahren wird bevorzugt bei Temperaturen von -20 bis 140°C, besonders bevorzugt bei Temperaturen von 20 bis 120°C, durchgeführt.

Das erfindungsgemäße Verfahren kann drucklos oder bei erhöhtem Druck (0,1 bis 12 bar) durchgeführt werden.

Das erfindungsgemäße Verfahren kann kontinuierlich oder diskontinuierlich bewerkstelligt werden, bevorzugt in kontinuierlicher Fahrweise.

Es ist möglich, die Polymerzusammensetzung durch Variation der Reaktionsbedingungen, wie der Variation des Verhältnisses an eingesetzten Diolefinen und aromatischen Vinylverbindungen, der Katalysatorkonzentration, der Reaktionstemperatur und Reaktionszeit, zu beeinflussen.

Ein weiterer Gegenstand der vorliegenden Erfindung ist die Verwendung der erfindungsgemäß hergestellten Copolymerisate aus konjugierten Diolefinen und vinylaromatischen Verbindungen in Kautschukformkörpern, in denen Copolymerisate aus konjugierten Diolefinen und vinylaromatischen Verbindungen mit einem hohen cis-1,4-Gehalt erwünscht sind. Insbesondere eignen sich die erfindungsgemäß hergestellten Copolymerisate zur Herstellung

von Reifen, bevorzugt Reifenlaufflächen.

Nach dem erfindungsgemäßen Verfahren ist es möglich, Copolymere von Diolefinen und Vinylaromaten zu erhalten, die im Gegensatz zu den anionischen Initiatoren, bezogen auf den Diolefinanteil einen hohen Gehalt an cis-1,4-Doppelbindungen besitzen, und die bei hoher Katalysatoraktivität und hohem Umsatz an eingesetzten Diolefinen weiterhin eine einfache Steuerung der Mikrostruktur, d.h. den Gehalt an seitenständigen Vinyl- und an cis-1,4-Einheiten, der Polymerzusammensetzung und des Molgewichtes, ermöglichen. Durch das beim erfindungsgemäßen Verfahren eingesetzte inerte, organische Lösungsmittel gestaltet sich die Aufarbeitung der erhaltenen Copolymerisate technisch besonders vorteilhaft.

## Beispiele

Die Katalysatorpräparation und die Polymerisationen wurden unter vollständigem Ausschluß von Luft und Feuchtigkeit unter Stickstoff-Atmosphäre durchgeführt.

Die Bestimmung des Gehaltes an Styrol im Polymeren sowie der Selektivität des Polybutadiens (cis-1,4-, trans-1,4- und Vinyl-1,2-Gehalt) erfolgt mittels IR-Spektroskopie, die Bestimmung der Glastemperatur $T_g$ mittels DSC.

### Beispiele 1 bis 4

Katalysatorpräparation

In einem 200-ml-Schlenkgefäß wurden 17,8 ml (4 mmol) Neodym(III)versatat-(NDV)-Lösung (0,225 mol/l in Hexan) vorgelegt und bei 25°C 0,5 ml (4 mmol) 1H-Inden und 12 ml (120 mmol) Isopren zugegeben. Anschließend wurde mit 78 ml (120 mmol) MAO*-Lösung (10 w-% in Toluol) versetzt und 2 Stunden bei 50°C gerührt. Nach dem Abkühlen auf RT wurde die Katalysatorlösung ohne weitere Behandlung für die Polymerisationsversuche eingesetzt.

Polymerisation

Die Polymerisation erfolgte in einem 2-Liter-Büchi-Glasautoklaven. Unter Stickstoff wurden die in Tabelle 1 angegebenen Mengen Styrol, 1,3-Butadien, Hexan (Isomerengemisch), Katalysatorlösung und Aluminium-Verbindung über Büretten zugegeben. Die Temperatur wurde entsprechend der Tabelle 1 eingestellt. Das Polymere wurde nach der angegebenen Reaktionszeit durch Fällen der Polymerlösung in Ethanol/BHT (2,6-Di-tert-butyl-4-methylphenol) isoliert und bis zur Massekonstanz im Vakuumtrockenschrank bei 60°C getrocknet. Die Ansatzgrößen, Reaktionsbedingungen und die Eigenschaften der erhaltenen Polymeren sind in Tabelle 1 angegeben.

*MAO = Methylalumoxan

Tabelle 1

| Beispiele 1 bis 5 | | | | |
|---|---|---|---|---|
| **Beispiel** | **1** | **2** | **3** | **4** |
| Katalysatorlösung in ml | 6,1 | 6,1 | 6,1 | 6,1 |
| NDV in mmol | 0,225 | 0,225 | 0,225 | 0,225 |
| **Polymerisation** | | | | |
| Hexan in ml | 900 | 900 | 900 | 900 |
| Styrol in ml | 82 | 82 | 40 | 100 |
| 1,3-Butadien in g | 74,4 | 74,4 | 112 | 59 |
| DIBAH in mmol | 3,375 | 3,375 | 3,375 | 3,375 |
| Temperatur in °C | 60 | 80 | 80 | 80 |
| Reaktionszeit in h | 4 | 4 | 3 | 4 |
| **Polymer** | | | | |
| Umsatz in % | 44 | 58 | 85 | 35 |
| Gehalt Styrol in Gew-% | 14,4 | 15,8 | 7,5 | 23,5 |
| Gehalt Butadien in Gew-% | 85,6 | 84,2 | 92,5 | 76,5 |
| cis-1,4 in % | 37,8 | 40,5 | 48,2 | 41,0 |
| trans-1,4 in % | 54,8 | 51,8 | 44,2 | 51,5 |
| 1,2 in % | 7,4 | 7,7 | 7,6 | 7,5 |
| Tg in °C | -84,6 | n.b. | -92,9 | n.b. |

**Beispiele 5 bis 6**

Katalysatorpräparation

In einem 200-ml-Schlenkgefäß wurden 17,8 ml (4 mmol) Neodym(III)versatat-Lösung (0,225 mol/l in Hexan) vorgelegt und bei 25°C 0,65 ml (4 mmol) 1,2,3,4,5-Pentamethylcyclopenta-1H-dien und 12 ml (120 mmol) Isopren zugegeben. Anschliessend wurde mit 78 ml (120 mmol) MAO-Lösung (10 w-% in Toluol) versetzt und 2 Stunden bei 50°C gerührt. Nach dem Abkühlen auf RT wurde die Katalysatorlösung ohne weitere Behandlung für die Polymerisationsversuche eingesetzt.

Polymerisation

Die Polymerisation erfolgte gemäß Beispiele 1 bis 4, wobei der oben beschriebene Katalysator eingesetzt wurde. Die Ansatzgrößen, Reaktionsbedingungen und die Eigenschaften der erhaltenen Polymere sind in Tabelle 2 angegeben.

Tabelle 2

| Beispiele 5 bis 6 | | |
|---|---|---|
| **Beispiel** | **5** | **6** |
| Katalysatorlösung in ml | 6,1 | 6,1 |
| NDV in mmol | 0,225 | 0,225 |
| **Polymerisation** | | |
| Hexan | 900 | 900 |
| Styrol in ml | 40 | 82 |
| 1,3-Butadien in g | 112 | 74 |
| DIBAH in mmol | 3,375 | 3,375 |
| Temperatur in °C | 80 | 80 |
| Reaktionszeit in h | 3 | 3 |
| **Polymer** | | |
| Umsatz in % | 88 | 60 |
| Gehalt Styrol in Gew-% | 7,3 | 18,8 |
| Gehalt Butadien in Gew-% | 92,7 | 81,2 |
| cis-1,4 in % | 36,4 | 27,0 |
| trans-1,4 in % | 52,9 | 62,8 |
| 1,2 in % | 10,7 | 10,3 |
| Tg in °C | n.b. | n.b. |

**Beispiele 7 bis 9**

Katalysatorpräparation

In einem 200-ml-Schlenkgefäß wurden 17,8 ml (4 mmol) Neodym(III)versatat-Lösung (0,225 mol/l in Hexan) vorgelegt und bei 25°C 0,5 ml (4 mmol) 1H-Inden und 12 ml (120 mmol) Isopren zugegeben. Anschließend wurde mit 78 ml (120 mmol) MAO-Lösung (10 w-% in Toluol) versetzt, 2 Stunden bei 50°C gerührt und nach dem Abkühlen auf RT für die Polymerisationsversuche eingesetzt.

Polymerisation

Die Polymerisation erfolgte gemäß Beispiele 1 bis 4, wobei MAO anstelle DIBAH als Scavenger eingesetzt wurde. Die Ansatzgrößen, Reaktionsbedingungen und die Eigenschaften der erhaltenen Polymere sind in Tabelle 3 angegeben.

Tabelle 3

| Beispiele 7 bis 9 | | | |
|---|---|---|---|
| **Beispiel** | **7** | **8** | **9** |
| Katalysatorlösung in ml | 6,1 | 6,1 | 6,1 |
| NDV in mmol | 0,225 | 0,225 | 0,225 |
| **Polymerisation** | | | |
| Hexan in ml | 900 | 900 | 900 |
| Styrol in ml | 82 | 82 | 82 |
| 1,3-Butadien in g | 74 | 74 | 74 |
| MAO in mmol | 3,375 | - | 6,75 |
| Temperatur in °C | 80 | 80 | 80 |
| Reaktionszeit in h | 4 | 4 | 4 |
| **Polymer** | | | |
| Umsatz in % | 53 | 52 | 59 |
| Gehalt Styrol in Gew-% | 18,6 | 14,7 | 19,1 |
| Gehalt Butadien in Gew-% | 81,4 | 85,3 | 80,9 |
| cis-1,4 in % | 50,9 | 45,9 | 51,8 |
| trans-1,4 in % | 41,7 | 46,6 | 40,8 |
| 1,2 in % | 7,4 | 7,5 | 7,4 |
| Tg in °C | -87,2 | n.b. | n.b. |
| $ML_{1+4}$(100°C) | 38 | 40 | 39 |

**Beispiele 10 bis 15**

Katalysatorpräparation

In einem 200-ml-Schlenkgefäß wurden 17,8 ml (4 mmol) Neodym(III)versatat-Lösung (0,225 mol/l in Hexan) vorgelegt und bei 25°C 0,5 ml (4 mmol) 1H-Inden und 12 ml (120 mmol) Isopren zugegeben. Anschließend wurde mit 78 ml (120 mmol) MAO-Lösung (10 w-% in Toluol) versetzt, 2 Stunden bei 50°C gerührt und nach dem Abkühlen auf RT für die Polymerisationsversuche eingesetzt.

Polymerisation

Die Polymerisation erfolgte gemäß Beispiele 1 bis 4, wobei die Menge von Katalysator und Feststoff variiert und wahlweise MAO oder DIBAH als Scavenger eingesetzt wurden. Die Ansatzgrößen, Reaktionsbedingungen und die Eigenschaften der erhaltenen Polymere sind in Tabelle 4 angegeben.

Tabelle 4

| Beispiele 10 bis 15 | | | | | | |
|---|---|---|---|---|---|---|
| **Beispiel** | **10** | **11** | **12** | **13** | **14** | **15** |
| Katalysatorlösung in ml | 4,1 | 4,9 | 5,0 | 6,72 | 3,4 | 2,5 |
| NDV in mmol | 0,150 | 0,180 | 0,186 | 0,248 | 0,124 | 0,093 |
| **Polymerisation** | | | | | | |
| Hexan in ml | 900 | 900 | 800 | 700 | 700 | 800 |
| Styrol in ml | 74 | 74 | 150 | 205 | 205 | 150 |
| 1,3-Butadien in g | 81 | 81 | 93 | 124 | 124 | 93 |
| MAO in mmol | 3,375 | 3,375 | - | - | - | - |
| DIBAH in mmol | - | - | 0,930 | 1,240 | 0,620 | 0,465 |
| Temperatur in °C | 80 | 80 | 80 | 80 | 80 | 80 |
| Reaktionszeit in h | 4 | 4 | 4 | 4 | 6 | 4 |
| **Polymer** | | | | | | |
| Umsatz in % | 58 | 61 | 43 | 47 | 47 | 30 |
| Gehalt Styrol in Gew-% | 14,4 | 15,8 | 18,4 | 23,3 | 23,7 | 13,3 |
| Gehalt Butadien in Gew-% | 95,6 | 84,2 | 81,6 | 76,7 | 76,3 | 86,7 |
| cis-1,4 in % | 57,9 | 54,3 | 51,2 | 47,8 | 60,2 | 67,9 |
| trans-1,4 in % | 34,5 | 38,2 | 41,3 | 44,6 | 32,2 | 24,2 |
| 1,2 in % | 7,6 | 7,5 | 7,6 | 7,6 | 7,7 | 7,9 |
| Tg in °C | n.b. | n.b. | n.b. | n.b. | n.b. | n.b. |
| $ML_{1+4}$(100°C) | 56 | 51 | n.b. | n.b. | n.b. | n.b. |

**Beispiel 16 bis 18**

Katalysatorpräparation

In einem 200-ml-Schlenkgefäß wurden 18,1 ml (4 mmol) Neodym(III)versatat-Lösung (0,22 mol/l in Hexan) vorgelegt und bei 25°C 12 ml (120 mmol) Isopren zugegeben. Anschließend wurde mit 78 ml (120 mmol) MAO-Lösung (10 w-% in Toluol) versetzt und 2 Stunden bei 50°C gerührt. Nach dem Abkühlen auf RT wurde die Katalysatorlösung ohne weitere Behandlung für die Polymerisationsversuche eingesetzt.

Polymerisation

Die Polymerisation erfolgte in einem 2-Liter-Büchi-Glasautoklaven. Unter Stickstoff wurden die in Tabelle 1 angegebenen Mengen Styrol, Butadien, Hexan, Katalysatorlösung und Aluminium-Verbindung über Büretten zugegeben. Die Temperatur wurde entsprechend der Tabelle 1 eingestellt. Das Polymere wurde nach der angegebenen Reaktionszeit durch Fällen der Polymerlösung in Ethanol/BHT (2,6-Di-tert-butyl-4-methylphenol) isoliert und bis zur Massekonstanz im Vakuumtrockenschrank bei 60°C getrocknet. Die Ansatzgrößen, Reaktionsbedingungen und die Eigenschaften der erhaltenen Polymeren sind in Tabelle 5 angegeben.

Tabelle 5

| Beispiel 16 bis 18 | | | |
|---|---|---|---|
| **Beispiel** | **16** | **17** | **18** |
| Katalysatorlösung in ml | 4,9 | 3,4 | 6,1 |
| NDV in mmol | 0,180 | 0,124 | 0,225 |
| Polymerisation | | | |
| Hexan in ml | 900 | 700 | 900 |
| Styrol in ml | 74 | 205 | 82 |
| 1,3-Butadien in g | 80,6 | 124 | 74,4 |
| MAO in mmol | 3,375 | - | 3,375 |
| DIBAH in mmol | - | 0,62 | - |
| Temperatur in °C | 80 | 80 | 80 |
| Reaktionszeit in h | 4 | 4 | 4 |
| Polymer | | | |
| Umsatz in % | 40 | 28 | 37 |
| Gehalt Styrol in Gew-% | 4,4 | 6,9 | 5,5 |
| Gehalt Butadien in Gew-% | 95,6 | 93,1 | 94,5 |
| cis in % | 61,6 | 62,1 | 58,2 |
| trans in % | 32,1 | 30,9 | 35,3 |
| 1,2 in % | 6,3 | 7,0 | 6,5 |
| $ML_{1+4}$(100°C) | 21 | 30 | 16 |

<u>**Beispiel 19**</u>

**Herstellung von Kautschukkörpern mit den erfindungsgemäß hergestellten Copolymerisaten**

Zur Prüfung der Copolymerisate wurde eine in der Reifenbranche übliche Laufflächen-Rezeptur gewählt. Der Styrolgehalt wurde dabei mit 17,5 % bezogen auf Polymer konstant gehalten.

**Rezeptur**

| Mischung-Nr. | 1 | 2 | 3 |
|---|---|---|---|
| Buna VSL 5025-1* | 96,25 | 88,55 | 80,9 |
| Buna CB 25* | 30 | 25,6 | 21,2 |
| SBR, vgl. Bsp. 11 | 0 | 10 | 20 |
| *Styrol im Compound* | *17,5* | *17,5* | *17,5* |
| *Vinyl im Compound* | *35,0* | *32,9* | *30,7* |
| *Cis im Compound* | *37,1* | *37,1* | *37,0* |
| *Trans im Compound* | *10,4* | *12,6* | *14,7* |
| Enerthene 1849-1 (BP) | 11,25 | 13,35 | 15,4 |
| Ruß N121 (Degussa Hüls) | 10 | | |
| Vulkasil S (Bayer) | 70 | | |
| Silan Si 69 (Degussa Hüls) | 6 | | |
| Zinkoxid RS (Degrillo) | 3 | | |
| Stearinsäure (Henkel) | 1 | | |
| Antilux 654 (Rhein Chemie) | 1 | | |
| Vulkanox HS (Bayer) | 1,5 | | |
| Vulkanox 4020 (Bayer) | 1,5 | | |
| Vulkacit CZ (Bayer) | 1,4 | | |
| Vulkacit D (Bayer) | 2 | | |
| Schwefel (Solvey) | 1,6 | | |

* Handelsprodukte der Firma Bayer

Die Mischungen (Polymer, Öl, Ruß, Zinloxid, Stearinsäure und Alterungsschutzmittel) wurden in einem Mischungskneter GK 1,5 bei ca. 150°C in 2 Stufen hergestellt. Die Vulkanisationschemikalien wurden später bei max. 115°C auf einer Walze eingemischt. Die Heizzeit zur Herstellung der Prüfkörper betrug 15 Minuten bei 170°C. Die Probekörper wurden entsprechend den in der Reifenindustrie üblichen DIN- und ASTM-Methoden geprüft.

**Vulkanisatwerte**

| Mischung-Nr. N .. | | 1 | 2 | 3 |
|---|---|---|---|---|
| Zugfestigkeit (MPa) | DIN 53504 | 18,7 | 17,7 | 18,3 |
| Dehnung (%) | DIN 53504 | 465 | 450 | 480 |
| Modul bei 100 % Dehnung (MPa) | DIN 53504 | 2,4 | 2,5 | 2,5 |
| Härte bei 23 °C (Shore A) | DIN 53505 | 66 | 67 | 68 |
| Härte bei 70 °C (Shore A) | DIN 53505 | 65 | 65 | 65 |

(fortgesetzt)

| Mischung-Nr. N .. | | 1 | 2 | 3 |
|---|---|---|---|---|
| Elastizität bei 23 °C (%) | DIN 53512 | 35 | 34 | 35 |
| Elastizität bei 70 °C (%) | DIN 53512 | 60 | 62 | 63 |
| Weiterreißfestigkeit (N/mm) | DIN 53515 | 37 | 41 | 43 |
| DIN Abrieb 40 ($mm^3$) | DIN 53516 | 160 | 148 | 146 |
| DIN Abrieb 60 ($mm^3$) | DIN 53516 | 101 | 87 | 82 |
| Goodrich Flexometer, Temperaturanstieg (Kelvin) | DIN 53533 | 15,8 | 15,2 | 13,9 |
| tan $\delta$ bei 60°C | DIN 53513 | 0,112 | 0,103 | 0,097 |

Bei nahezu unveränderten mechanischen Eigenschaften, bzw. leicht verbesserter Weiterreißfestigkeit, zeigt sich eine deutliche Verbesserung in den dynamischen Werten. So wird die Fähigkeit der Energiedissipation der Vulkanisate bereits bei Einsatz von nur 10 bis 20 % des erfindungsgemäß hergestellten Copolymerisats bezogen auf Polymer signifikant verbessert. Die Erwärmung des Vulkanisates unter mechanischer Einwirkung wird reduziert (Goodrich Flexometer-Test), der tan $\delta$ , gemessen bei 60°C, ein Maß für den Rollwiderstand des Reifens, verbessert sich deutlich.

## Patentansprüche

1. Verfahren zur Copolymerisation von konjugierten Diolefinen mit vinylaromatischen Verbindungen, dadurch gekennzeichnet, dass man die Polymerisation der konjugierten Diolefine mit den vinylaromatischen Verbindungen in Gegenwart von Katalysatoren bestehend aus

   a) mindestens einer Verbindung der Seltenen Erdmetalle,

   b) mindestens einer Cyclopentadienylverbindung und

   c) mindestens einer Organoaluminiumverbindung

   oder bestehend aus

   a) mindestens einer Verbindung der Seltenen Erdmetalle und

   c) mindestens einer Organoaluminiumverbindung

   sowie in Anwesenheit von inerten aliphatischen und/oder aromatischen Lösungsmitteln oder deren Mischungen bei Temperaturen von -30 bis +140°C durchführt, wobei das molare Verhältnis der Komponenten (a):(b):(c) im Bereich von 1:0,01 bis 1,99:0,1 bis 1000 oder wobei das molare Verhältnis der Komponenten (a):(c) im Bereich von 1:0,1 bis 1000 liegt, die Komponente (a) des Katalysators in Mengen von 1 µmol bis 10 mmol, bezogen auf 100 g der eingesetzten konjugierten Diolefine, und die aromatische Vinylverbindung in Mengen von 20 g bis 2000 g, bezogen auf 100 g der eingesetzten konjugierten Diolefine, eingesetzt werden.

2. Verfahren nach Anspruch 1, dadurch gekennzeichnet, dass man als konjugierte Diolefine 1,3-Butadien, 1,3-Isopren, 2,3-Dimethylbutadien, 2,4-Hexadien, 1,3-Pentadien und/oder 2-Methyl-1,3-pentadien einsetzt.

3. Verfahren nach Ansprüchen 1 und 2, dadurch gekennzeichnet, dass als Verbindungen der Seltenen Erdmetalle deren Alkoholate, Phosphonate, Phosphinate, Phosphate oder Carboxylate, die Komplexverbindungen der Seltenen Erdmetalle mit Diketonen und/oder die Additionsverbindungen der Halogenide der Seltenen Erdmetalle mit einer Sauerstoff- oder Stickstoff-Donator-Verbindung eingesetzt werden.

4. Verfahren nach Ansprüchen 1 bis 3, dadurch gekennzeichnet, dass als Verbindungen der Seltenen Erdmetalle Neodymversatat, Neodymoctanat und/oder Neodymnaphthenat eingesetzt werden.

5. Verfahren nach Ansprüchen 1 bis 4, dadurch gekennzeichnet, dass man als Cyclopentadiene Verbindungen der

Formeln (I), (II) und/oder (III)

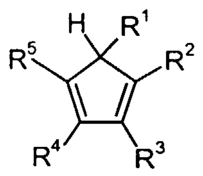

(I)

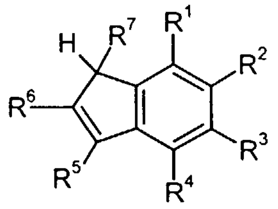

(II)

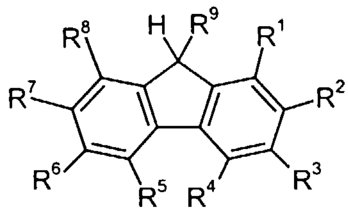

(III)

einsetzt, in denen $R^1$ bis $R^9$ gleich oder verschieden sind oder gegebenenfalls miteinander verbunden sind oder am Cyclopentadien der Formel (I), (II) oder (III) kondensiert sind, und für Wasserstoff, eine $C_1$- bis $C_{30}$-Alkylgruppe, eine $C_6$- bis $C_{10}$-Arylgruppe, eine $C_7$- bis $C_{40}$-Alkylarylgruppe oder eine $C_3$- bis $C_{30}$- Silylgruppe stehen, wobei die Alkylgruppen entweder gesättigt oder einfach oder mehrfach ungesättigt sein können und Heteroatome enthalten können.

**6.** Verfahren nach Ansprüchen 1 bis 5, dadurch gekennzeichnet, dass als Organoaluminium-Verbindungen Alumoxane und/oder Aluminiumorganylverbindungen eingesetzt werden.

**7.** Verfahren nach den Ansprüchen 1 bis 6, dadurch gekennzeichnet, dass man als Lösungsmittel Butane, Pentane, Hexane, Cyclohexan, Cyclopentan, Cycloheptan, Heptane, Benzol, Toluol, Ethylbenzol, Dimethylbenzole, Dichlormethan oder Chlorbenzol oder Mischungen aus diesen einsetzt.

**8.** Verfahren nach Ansprüchen 1 bis 7, dadurch gekennzeichnet, dass man als aromatische Vinylverbindungen Styrol, α-Methylstyrol, α-Methylstyrol-Dimer, p-Methylstyrol, Divinylbenzol und/oder Alkylstyrole mit 2 bis 6 C-Atomen im Alkylrest einsetzt und als konjugierte Diolefine 1,3-Butadien, 1,3-Isopren, 2,3-Dimethylbutadien, 2,4-Hexadien, 1,3-Pentadien und/ oder 2-Methyl-1,3-pentadien.

**9.** Verfahren nach Ansprüchen 1 bis 8, dadurch gekennzeichnet, dass man neben den konjugierten Dienen noch andere ungesättigte Verbindungen einsetzt, die mit den genannten Diolefinen copolymerisiert werden können, und zwar in Mengen von 0,1 bis 80 mol-%, bezogen auf das eingesetzte konjugierte Dien.

**10.** Verwendung der nach Anspruch 1 hergestellten Copolymerisate aus konjugierten Dienen und vinylaromatischen Verbindungen zur Herstellung von Kautschukformkörpern, insbesondere Reifen.